# EUROPEAN PATENT APPLICATION

(11) **EP 2 757 816 A1**
(43) Date of publication of application: **23.07.2014**
(21) Application number: 13179319.2
(22) Date of filing: 05.08.2013
(51) Int. Cl.: H04W 4/20

(54) **Network connection system and method**

(30) Priority: 22.01.2013 TW 102102396
(71) Applicant: Ingrasys Technology Inc., Taoyuan (TW)
(72) Inventor: Sun, Yu-Hung, Taoyuan (TW)
(74) Representative: Gray, John James

(57) **Abstract**

A network connection method applied between at least one network camera and at least one network storage device is provided. The network connection method includes steps of controlling the at least one network storage device to send inviter information in response to a first instruction, controlling the network camera to receive the inviter information in response to a second instruction, controlling the network camera to send reply information based on the received inviter information, controlling the network storage device to receive the reply information, and connecting the network camera to the network storage device based on the reply information. A related network connection system and a storage medium are also provided.

## Description

### BackGround

### Technical Field

The present disclosure relates to network systems, and particularly to a network connection system and a connection method thereof.

### Description of Related Art

Conventionally, network cameras are manually connected to network storage devices. However, it is time-consuming for the manual operation.

Therefore, what is needed is a network connection system and method to connect network cameras and the network storage devices to overcome the above described limitations.

### BRIEF DESCRIPTION OF THE DRAWING

FIG. 1 is a schematic diagram of a network connection system in accordance with an exemplary embodiment.

FIG. 2 is a block diagram of the hardware infrastructure of the network connection system of FIG. 1, in accordance with an exemplary embodiment.

FIG. 3 is a flowchart of a network connection method implemented by the network connection system of FIG. 1, in accordance with an exemplary embodiment.

### DETAILED DESCRIPTION

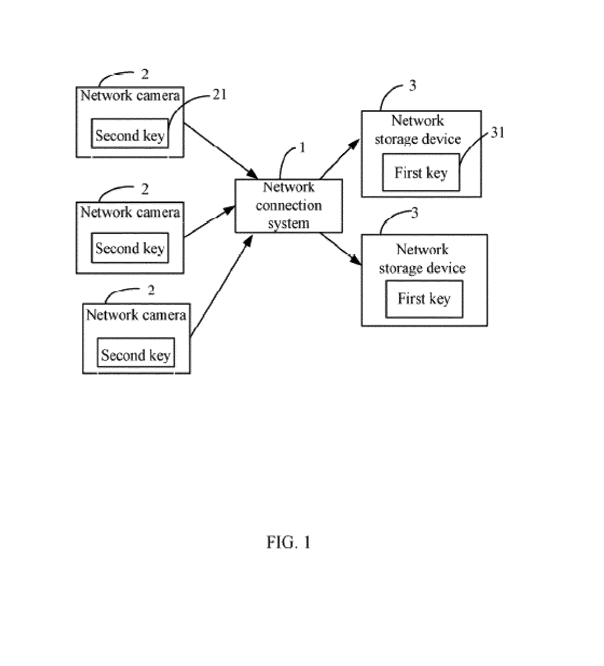

FIG. 1 shows an exemplary embodiment of a network connection system 1 (hereinafter "system"). The system 1 is applied between at least one network camera 2 and at least one network storage device 3. The network camera 2 captures video data. The network storage device 3 stores and manages the video data captured by the network camera 2.

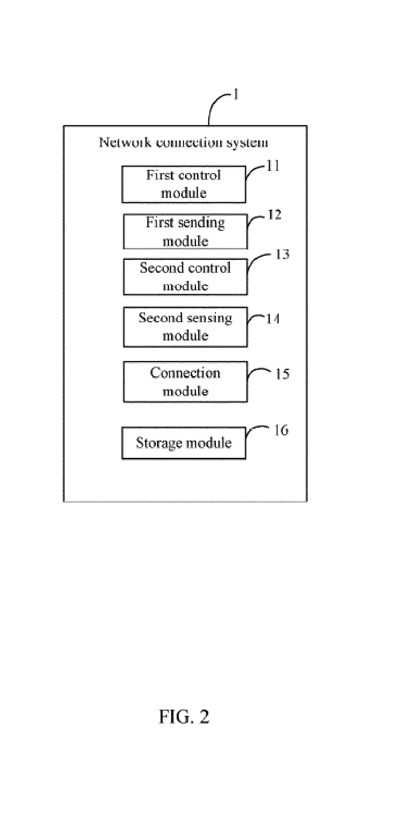

FIG. 2 shows that the system 1 includes a number of modules. The number of modules is executed by at least one processor. The number of modules includes a first control module 11, a second control module 13, and a connection module 15.

In a first embodiment, the first control module 11 controls the network storage device 3 to send inviter information in response to a first instruction. The second control module 13 controls the network camera 2 to receive the inviter information. The second control module 13 further controls the network camera 2 to send reply information based on the received inviter information. The first control module 11 further controls the network storage device 3 to receive the reply information. The connection module 15 connects the network camera 2 to the network storage device 3 based on the reply information. In a second embodiment, the number of modules further includes a first sensing module 12 and a second sending module 14. The first sensing module 12 senses whether there is inviter information within a first predetermined period of time in response to a second instruction. The second control module 13 controls the network camera 2 to receive the inviter information when there is inviter information within a first predetermined period of time. The second control module 13 further controls the network camera 2 to send reply information based on the received inviter information. The second sensing module 14 senses whether there is at least one reply information within a second predetermined period of time after the network storage device 3 sends the inviter information. The first control module 11 further controls the network storage device 3 to receive the reply information when there is the reply information within the second predetermined period of time. The connection module 15 connects the network camera 2 to the network storage device 3 based on the reply information. In one embodiment, the first control module 11, the second sensing module 14, and the connection module 15 run in the network storage device 3, the second control module 13 and the first sensing module 12 run in the network camera 2.

In one embodiment, the first control module 11 further controls the network storage device 3 to suspend reception of the reply information when the reply information is sensed after the second predetermined period of time. The first control module 11 further controls the network storage device 3 to suspend sending of the inviter information when the current time exceeds the second predetermined period of time.

The number of modules further includes a storage module 16. The storage module 16 stores setting parameters such as, IP address of the network camera 2, which is connected to the network storage device 3, thereby connecting the network storage device 3 to the network camera 2 based on the stored setting parameters. In one embodiment, the storage module 16 runs in the network storage device 3.

In one embodiment, a first key 31 is set on the network storage device 3. The first instruction is generated when the first key 31 is triggered. A second key 21 is set on the network camera 2. The second instruction is generated when the second key 21 is triggered or when a power source of the network camera 2 is turned on. The first key 31 and the second key 21 may be switches, buttons, for example.

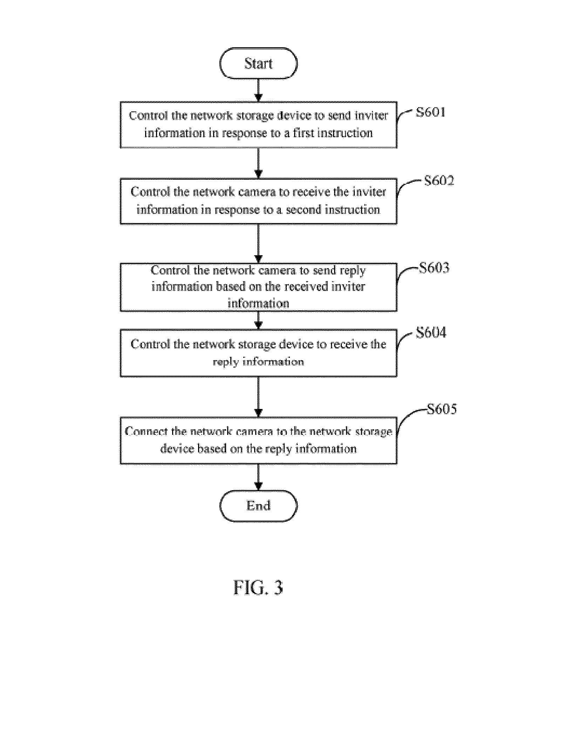

FIG. 3 is a flowchart of a network connection method implemented by the network connection system of FIG. 1, in accordance with an exemplary embodiment.

In step S601, the first control module 11 controls the network storage device 3 to send inviter information in response to a first instruction.

In step S602, the second control module 13 controls the network camera 2 to receive the inviter information in response to a second instruction.

In step S603, the second control module 13 controls the network camera 2 to send reply information based on the received inviter information.

In step S604, the first control module 11 controls the network storage device 3 to receive the reply information.

In step S605, the connection module 15 connects the network camera 2 to the network storage device 3 based on the received reply information.

Furthermore, the method further includes sub-steps: the first sensing module 12 senses whether there is inviter information within a first predetermined period of time in response to the second instruction, and the second control module 13 controls the network camera 2 to receive the inviter information when there is inviter information within a first predetermined period of time.

Furthermore, the method further includes sub-steps: the second sensing module 14 senses whether there is at least one reply information within a second predetermined period of time after the network storage device 3 sends the inviter information, and the first control module 11 controls the network storage device 3 to receive the reply information when there is the reply information within the second predetermined period of time.

Furthermore, the method further includes sub-steps: the first control module 11 controls the network storage device 3 to suspend reception of the reply information when the reply information is sensed after the second predetermined period of time. The first control module 11 controls the network storage device 3 to suspend sending of the inviter information when the current time exceeds the second predetermined period of time.

Furthermore, the method further includes sub-steps: the storage module 16 stores setting parameters such as, IP address of the network camera 2 which is connected to the network storage device 3.

Although various embodiments have been specifically described, the disclosure is not to be construed as being limited thereto. Various changes or modifications may be made to the embodiments without departing from the scope and spirit of the disclosure.

## Claims

1. A network connection system applied between at least one network camera and at least one network storage device, wherein the at least one network camera is configured to capture video data, the at least one network storage device is configured to store and manage the video data captured by the network camera, the network connection system comprising:
at least one processor; and
a plurality of modules to be executed by the at least one processor, wherein
the plurality of modules comprises:
a first control module configured to control the at least one network storage device to send inviter information in response to a first instruction;
a second control module configured to control the network camera to receive the inviter information in response to a second instruction;
a second control module configured to control the network camera to send reply information based on the received inviter information;
a first control module configured to control the network storage device to receive the reply information; and
a connection module configured to connect the network camera to the network storage device based on the reply information.

2. The network connection system as described in claim 1, wherein the plurality of modules further comprises:
a first sensing module configured to sense whether there is inviter information within a first predetermined period of time in response to the second instruction wherein the second control module is further configured to control the network camera to receive the inviter information when there is the inviter information within the first predetermined period of time.

3. The network connection system as described in claim 1 or 2, wherein the plurality of modules further comprises:
a second sensing module configured to sense whether there is at least one reply information within a second predetermined period of time after the network storage device sends the inviter information,
wherein the first control module is further configured to control the network storage device to receive the reply information when there is the reply information within the second predetermined period of time after the network storage device sends the inviter information.

4. The network connection system as described in claim 3, wherein the first control module is further configured to control the network storage device to suspend reception of the reply information when the reply information is sensed after the second predetermined period of time.

5. The network connection system as described in claim 3, wherein the first control module is further configured to control the network storage device to suspend sending of the inviter information when the current time exceeds the second predetermined period of time.

6. The network connection system as described in any preceding claim, wherein the first instruction is generated when a first key set on the network storage device is triggered.

7. The network connection system as described in any preceding claim, wherein the second instruction is generated when a second key set on the network camera is triggered or a power source of the network camera is turned on.

8. A network connection method applied between at least one network camera and at least one network storage device, wherein the at least one network camera is configured to capture video data, the at least one network storage device is configured to store and manage the video data captured by the network camera, the network connection method comprising:
controlling the at least one network storage device to send inviter information in response to a first instruction;
controlling the network camera to receive the inviter information in response to a second instruction;
controlling the network camera to send reply information based on the received inviter information;
controlling the network storage device to receive the reply information; and
connecting the network camera to the network storage device based on the reply information.

9. The network connection method as described in claim 8, further comprising:
sensing whether there is inviter information within a first predetermined period of time in response to the second instruction; and
controlling the network camera to receive the inviter information when there is the inviter information within the first predetermined period of time.

10. The network connection method as described in claim 8 or 9, further comprising:
sensing whether there is at least one reply information within a second predetermined period of time after the network storage device sends the inviter information; and
controlling the network storage device to receive the reply information when there is the reply information within the second predetermined period of time after the network storage device sends the inviter information.

11. The network connection method as described in claim 10, further comprising:
controlling the network storage device to suspend reception of the reply information when the reply information is sensed after the second predetermined period of time.

12. The network connection method as described in claim 10, further comprising:
controlling the network storage device to suspend sending of the inviter information when the current time exceeds the second predetermined period of time.

13. The network connection method as described in any of claims 8 to 12, wherein the first instruction is generated when a first key set on the network storage device is triggered.

14. The network connection method as described in any of claims 8 to 13, wherein the second instruction is generated when a second key set on the network camera is triggered or a power source of the network camera is turned on.

15. A storage medium storing a plurality of modules, the plurality of modules comprising instructions executable by a processor of a network connection system to perform a network connection method, the network connection system applying between at least one network camera and at least one network storage device, the at least one network camera configured to capture video data, the at least one network storage device configured to store and manage the video data captured by the network camera, the method comprising:
controlling the at least one network storage device to send inviter information in response to a first instruction;
controlling the network camera to receive the inviter information in response to a second instruction;
controlling the network camera to send reply information based on the received inviter information;
controlling the network storage device to receive the reply information; and
connecting the network camera to the network storage device based on the reply information.
